# FASCICULE DE BREVET EUROPEEN

(11) **EP 3 084 049 B1**
(45) Date de publication et mention de la délivrance du brevet: **18.03.2020**
(21) Numéro de dépôt: 14828223.9
(22) Date de dépôt: 17.12.2014
(51) Int. Cl.: C25D 11/04, C25D 11/02, C25D 11/08, C25D 11/12, C25D 11/18, C25D 11/24, C23C 18/12

(54) **PROCÉDÉ DE TRAITEMENT ANTI-CORROSION ET ANTI-USURE**
ANTIKORROSIVES UND VERSCHLEISSSCHUTZVERFAHREN
ANTICORROSION AND ANTIWEAR METHOD

(30) Priorité: 18.12.2013 FR 1362920
(43) Date de publication de la demande: 26.10.2016
(73) Titulaire: Safran Helicopter Engines, 64510 Bordes (FR); Messier-Bugatti-Dowty, 78140 Vélizy-Villacoublay (FR)
(72) Inventeur: GURT SANTANACH, Julien, F-40230 Saint Vincent De Tyrosse (FR); CRABOS, Fabrice, F-64510 Assat (FR); ESTEBAN, Julien, 31100 Toulouse (FR)
(74) Mandataire: Cabinet Beau de Loménie
(86) Numéro de dépôt international: PCT/FR2014/053375
(87) Numéro de publication internationale: WO 2015/092265

(56) Documents cités:
- WO-A1-01/32965
- WO-A1-2010/112122

## Description

### DOMAINE DE L'INVENTION

Le présent exposé concerne un procédé de traitement anti-corrosion et anti-usure d'un substrat en aluminium ou en alliage d'aluminium. Il concerne également une pièce mécanique comprenant un revêtement obtenu par un tel procédé de traitement ainsi qu'une turbomachine et un train d'atterrissage comprenant une telle pièce.

Un tel procédé est notamment particulièrement utile dans le domaine aéronautique pour protéger certaines pièces mécaniques d'avions ou d'hélicoptères soumises à la fois à de la corrosion et à de l'usure.

### ETAT DE LA TECHNIQUE ANTERIEURE

Dans une turbomachine, d'hélicoptère notamment, certaines pièces en aluminium ou en alliage d'aluminium sont soumises à la fois à des contraintes de corrosion et d'usure. Par exemple, certaines pièces du système de régulation carburant sont amenées à coulisser contre d'autres pièces, générant ainsi du frottement ; en outre le passage répété de carburant peut engendrer une érosion de ces pièces : ces zones de frottement et/ou d'érosion doivent donc être traitées spécifiquement contre l'usure. De plus, ces mêmes pièces sont également en contact avec le milieu extérieur qui peut se révéler corrosif, notamment en présence d'humidité et tout particulièrement en conditions salines, près de la mer notamment : ces pièces doivent donc également être traitées contre la corrosion sur toutes les zones qui ne sont pas traitées contre l'usure.

Pour assurer une telle protection, on connait un procédé au cours duquel on réalise sur la pièce une première étape d'oxydation anodique chromique, assurant la protection contre la corrosion, puis une seconde étape d'oxydation anodique dure des zones à traiter contre l'usure.

Toutefois, le bain utilisé pour réaliser cette oxydation anodique chromique comprend certains constituants dangereux, notamment du Cr VI, qui seront bientôt interdits d'utilisation par la réglementation REACh.

Dès lors, un autre procédé imaginé pour se conformer à la réglementation REACh vise à remplacer l'étape d'oxydation anodique chromique par une étape d'oxydation anodique sulfurique.

Toutefois, le bain de l'oxydation anodique dure est capable de dégrader la couche d'oxyde ainsi obtenue de telle sorte qu'une étape intermédiaire de masquage par cirage est indispensable pour protéger les zones de la couche d'oxyde anti-corrosion que l'on souhaite conserver. Ceci entraîne en outre l'ajout d'une étape finale de décirage de la pièce à l'issue de l'oxydation anodique dure pour obtenir la pièce finale. Ces étapes supplémentaires, longues, chères et fastidieuses, pèsent donc sur l'efficacité et la rentabilité globale de ce procédé.

WO 01/32965 A1 décrit un procédé de traitement d'un substrat en aluminium ou en alliage d'aluminium, qui comprend une étape de traitement sol-gel formant une couche sol-gel servant de masque, et une étape d'oxydation dure, postérieure à l'étape de traitement sol-gel et à une étape d'usinage, afin de former une couche d'oxyde dure localisée.

WO 2010/112122 A1 décrit un procédé de fabrication d'un réflecteur comprenant une étape de formation d'une couche d'oxyde par anodisation, à priori poreuse et non scellée, suivie du dépôt d'une couche sol-gel.

Il existe donc un réel besoin pour un procédé de traitement anti-corrosion et anti-usure d'un substrat en aluminium ou en alliage d'aluminium qui soit dépourvu, au moins en partie, des inconvénients inhérents aux procédés connus précités.

### PRESENTATION DE L'INVENTION

La présente invention concerne un procédé de traitement anti-corrosion et anti-usure d'un substrat en aluminium ou en alliage d'aluminium selon la revendication 1. Plus généralement, le présent exposé concerne un procédé de traitement anti-corrosion et anti-usure d'un substrat en aluminium ou en alliage d'aluminium, le procédé comprenant, appliquées au substrat, une étape de traitement sol-gel formant une couche sol-gel; et une étape d'oxydation dure, postérieure à l'étape de traitement sol-gel, formant une couche d'oxyde dure.

Dans le présent exposé, on entend par « couche » une région de composition donnée au sein du revêtement obtenu par un procédé de traitement anti-corrosion et anti-usure du présent exposé : il peut s'agir d'une couche déposée sur le substrat ou d'une couche formée dans l'épaisseur du substrat initial, par exemple par oxydation du substrat.

En outre, dans le présent exposé, les couches ne sont pas nécessairement empilées les unes au-dessus des autres, certaines couches pouvant être juxtaposées, et non superposées, à d'autres. En particulier, la couche d'oxyde dure peut être prévue de manière attenante à la couche sol-gel, sans recouper toutefois cette dernière.

Grâce à un tel procédé utilisant un traitement sol-gel, il est possible d'obtenir très facilement un revêtement pour une pièce mécanique en aluminium ou alliage d'aluminium présentant de très bonnes propriétés de résistance à la corrosion, apportées principalement par le sol-gel, et à l'usure, apportées principalement par l'oxydation dure.

Les traitements sol-gel, aujourd'hui bien connus dans le domaine des matériaux vitreux, permettent d'obtenir des matériaux vitreux par simple polymérisation de précurseurs moléculaire en solution, sans passer par l'étape de fusion. Ces traitements sont en particulier bien appropriées pour la synthèse de verres hybrides organique-inorganique. Cette composition chimique organique-inorganique, ainsi que les fortes liaisons interatomique du sol-gel, offrent à la couche sol-gel de très bonnes propriétés barrière vis-à-vis de l'environnement extérieur, et ainsi une grande résistance à la corrosion, ce qui permet à la pièce mécanique de résister à la corrosion atmosphérique, y compris en milieu marin et donc salin par exemple.

De plus, cet effet barrière lui permet de ne pas être dégradée lors de l'oxydation dure qui se déroule généralement dans des bains corrosifs : dès lors, les propriétés anti-corrosion du revêtement sont conservées même après immersion prolongée dans un bain d'oxydation dure.

En raison de la proportion importante de composés organiques dans le sol-gel, ce dernier est en outre un isolant électrique : dès lors, le courant utilisé lors de l'oxydation dure ne traverse pas la couche sol-gel, ce qui évite la dégradation de cette couche ainsi que l'oxydation non souhaitée du substrat sous cette couche. La couche sol-gel forme donc naturellement un masque protégeant le substrat contre l'oxydation dure : ainsi, seules les zones non-traitée par le sol-gel ou celles dans lesquelles la couche sol-gel a été retirée seront affectée par l'oxydation dure. Ceci permet de définir facilement les couches à traiter contre l'usure.

En outre, la large gamme des sol-gels existants permet de choisir ceux qui offrent les meilleures propriétés visées et qui respectent le mieux les contraintes sanitaires et environnementales telle la réglementation REACh.

Le traitement sol-gel est de plus facile et rapide à mettre en œuvre. Cette étape s'insère en particulier facilement dans les gammes de production actuelles et est plus rapide que l'étape traditionnelle d'oxydation anodique chromique. En outre, un tel procédé est facile à mettre en œuvre y compris pour des pièces dont les zones à traiter sont difficilement accessibles.

Dans certains modes de mise en œuvre, l'étape d'oxydation dure est une oxydation anodique dure (OAD). L'utilisation d'un traitement sol-gel est d'autant plus intéressante dans de tels modes de mise en œuvre car le sol-gel présente une forte résistance aux acides qui lui permet de résister au bain acide de l'oxydation anodique dure.

Dans d'autres modes de mise en œuvre, l'étape d'oxydation dure est une oxydation dure par micro-arcs. Cette dernière est réalisée de préférence dans un bain basique.

Le procédé comprend en outre une étape d'oxydation supplémentaire, préalable à l'étape de traitement sol-gel, formant une couche d'oxyde supplémentaire. Une telle protection double-couche associant une couche d'oxyde à une couche sol-gel permet de renforcer la résistance du revêtement à la corrosion. En outre, la couche sol-gel protège la couche d'oxyde supplémentaire vis-à-vis du bain de l'oxydation dure et prévient ainsi la dégradation de cette couche.

Dans certains modes de mise en œuvre, l'étape d'oxydation supplémentaire est une oxydation anodique sulfurique (OAS), tartro-sulfurique ou phosphorique.

Dans certains modes de mise en œuvre, l'étape de traitement sol-gel a lieu sur la couche d'oxyde supplémentaire sans étape préalable de colmatage de cette couche. Cette étape de colmatage n'est pas nécessaire en effet car le sol-gel remplit lui-même, partiellement ou en totalité, les porosités de la couche d'oxyde supplémentaire dans son épaisseur.

Lors de l'étape de traitement sol-gel, le sol-gel s'infiltre dans les porosités de la couche d'oxyde supplémentaire. Ceci renforce en outre l'accroche de la couche sol-gel sur la couche d'oxyde supplémentaire.

Dans certains modes de mise en œuvre, l'étape de traitement sol-gel comprend une sous-étape de dépôt du sol-gel et une sous-étape de cuisson du sol-gel. La cuisson permet la réticulation du sol-gel.

Dans certains modes de mise en œuvre, la sous-étape de dépôt du sol-gel est réalisée par trempe du substrat dans un bain de sol-gel.

Dans d'autres modes de mise en œuvre, la sous-étape de dépôt du sol-gel est réalisée par projection du sol-gel sur le substrat.

Dans certains modes de mise en œuvre, la sous-étape de cuisson est réalisée entre 100 et 200°C, de préférence entre 130 et 150°C.

Dans certains modes de mise en œuvre, la sous-étape de cuisson dure entre 40 et 60 minutes.

Dans certains modes de mise en œuvre, au moins une partie du sol-gel utilisé comprend du glycidoxypropyltrimethoxysilane.

Dans certains modes de mise en œuvre, au moins une partie du sol-gel utilisé est le sol-gel commercialisé par ICS sous la dénomination IC23.5 (marque déposée). Ce dernier est tout particulièrement adapté pour les pièces amenées à entrer en contact avec du kérosène. Naturellement, tout autre sol-gel de même composition ou de composition équivalente peut également être utilisé.

Dans d'autres modes de mise en œuvre, au moins une partie du sol-gel utilisé est le sol-gel commercialisé par ICS sous la dénomination 1K-EBSil (marque déposée). Ce dernier est tout particulièrement adapté pour les pièces amenées à entrer en contact avec des fluides hydrauliques. Naturellement, tout autre sol-gel de même composition ou de composition équivalente peut également être utilisé.

En particulier, de tels sol-gels permettent une tenue minimale de 500h au brouillard salin selon le test conforme à la norme ISO 9227.

Le procédé comprend en outre une étape d'usinage, réalisée entre l'étape de traitement sol-gel et l'étape d'oxydation dure, au cours de laquelle au moins une zone à traiter est usinée de manière à éliminer dans cette zone au moins la couche sol-gel et la couche d'oxyde supplémentaire. Une telle étape permet de mettre à jour une zone du substrat à traiter spécifiquement contre l'usure en retirant localement la couche électriquement isolante constituée par le sol-gel et la couche d'oxyde supplémentaire, permettant ainsi l'oxydation dure de cette zone. Il va de soi que certaines pièces peuvent présenter plusieurs zones distinctes à traiter spécifiquement contre l'usure auquel cas plusieurs zones distinctes peuvent être usinées. En raison de cet usinage, la couche sol-gel et/ou que la couche d'oxyde dure obtenue peut être discontinue.

Dans certains modes de mise en œuvre, le procédé est dépourvu de toute étape d'oxydation anodique chromique (OAC).

Le présent exposé concerne également une pièce mécanique comprenant un substrat en aluminium ou en alliage d'aluminium, et un revêtement anti-corrosion et anti-usure obtenu par un procédé selon l'un quelconque des modes de mise en œuvre ci-dessus.

Le présent exposé concerne également une pièce mécanique comprenant un substrat en aluminium ou en alliage d'aluminium, une couche sol-gel, et une couche d'oxyde d'aluminium.

La pièce comprend en outre un couche d'oxyde d'aluminium supplémentaire située sous la couche sol-gel.

Du sol-gel est présent dans des porosités de la couche d'oxyde supplémentaire.

Dans certains modes de réalisation, au moins une partie du sol-gel est un des sol-gels mentionnés plus haut.

Dans certains modes de réalisation, la couche de sol-gel et la couche d'oxyde dure sont attenantes dans le plan de la surface du substrat mais ne se recoupent pas.

Dans certains modes de réalisation, la couche sol-gel présente une épaisseur comprise entre 1 à 10 µm.

Dans certains modes de réalisation, la couche d'oxyde dure présente une épaisseur comprise entre 40 et 100 µm.

Dans certains modes de réalisation, la couche d'oxyde supplémentaire présente une épaisseur comprise entre 2 à 12 µm.

Le présent exposé concerne également une turbomachine comprenant une pièce mécanique selon l'un des modes de réalisation ci-dessus.

Le présent exposé concerne également un train d'atterrissage comprenant une pièce mécanique selon l'un des modes de réalisation ci-dessus.

Les caractéristiques et avantages précités, ainsi que d'autres, apparaîtront à la lecture de la description détaillée qui suit d'exemples de mise en œuvre du procédé proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de mise en œuvre différents mais ayant une fonction analogue sont repérés sur les figures par des références numériques incrémentées de 100, 200, etc.

Les FIG 1A à 1E illustrent différentes étapes d'un procédé ne faisant pas partie de l'invention.

Les FIG 2A à 2F illustrent différentes étapes d'un exemple de procédé selon l'invention.

### DESCRIPTION DETAILLEE D'EXEMPLE(S) DE REALISATION

Afin de rendre plus concrète l'invention, des exemples de procédés sont décrits en détail ci-après, en référence aux dessins annexés.

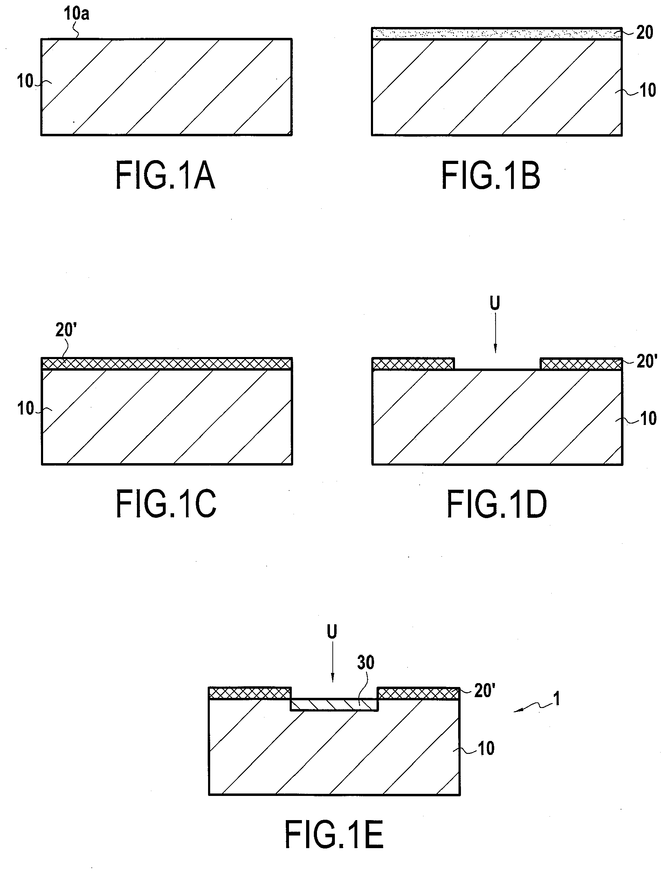

Les FIG 1A à 1E illustrent un procédé visant à munir un substrat 10 en aluminium, ou en alliage d'aluminium, d'un revêtement de protection anti-usure est anti-corrosion. Le substrat 10 représenté à la FIG 1A peut être notamment une pièce hydromécanique de régulation carburant d'une turbomachine d'hélicoptère ou une bride de fixation pour demi-roue de train d'atterrissage, pour ne citer que ces exemples. Dans un premier temps, le substrat 10 peut subir des étapes préliminaires de préparation telles que des étapes de dégraissage, de rinçage et/ou de décapage.

Une fois la surface 10a du substrat 10 ainsi apprêtée, on applique une couche de sol-gel liquide 20 sur la surface 10a du substrat 10. Ce sol-gel peut notamment être le sol-gel commercialisé par ICS sous la dénomination IC23.5 (marque déposée), notamment dans des applications où la pièce 1 est amenée à entrer en contact avec du kérosène ; il peut également s'agir du sol gel commercialisé par ICS sous la dénomination 1K-EBSil (marque déposée), en particulier dans des applications où la pièce 1 est amenée à entrer en contact avec des fluides hydrauliques. Naturellement, d'autres sol-gels de composition équivalente, ou ayant d'autres compositions présentant des propriétés anti-corrosion, peuvent également être utilisés.

La couche de sol-gel liquide 20 peut être appliquée sur la surface 10a du substrat 10 au pinceau, à la manière d'une peinture. Le sol-gel liquide peut également être projeté contre la surface 10a du substrat 10, par exemple à l'aide d'un pistolet à peinture. Dans un autre exemple, le sol-gel pourrait également être déposé par trempe du substrat 10 dans un bain de sol gel liquide.

Une fois cette étape de dépôt du sol-gel terminée, la pièce de la FIG 1B subit une étape de cuisson dans un four durant laquelle a lieu la réticulation du sol-gel. Cette étape de cuisson peut être menée dans un four à une température d'environ 140° pendant une durée de 50 minutes. À l'issue de cette étape de cuisson, on obtient la pièce de la FIG 1C dans laquelle une couche sol-gel solidifiée 20' recouvre le substrat 10, cette couche de sol-gel solide 20' offrant la protection anti-corrosion escomptée.

À l'issue de cette étape, la zone U de la pièce à traiter spécifiquement contre l'usure est usinée de manière à retirer localement la couche de sol-gel solide 20' afin de découvrir le substrat 10. La pièce ainsi obtenue, représentée à la FIG 1D, peut ensuite subir des étapes de préparation telles que des étapes de dégraissage et/ou de rinçage.

La pièce ainsi apprêtée est ensuite plongée dans un bain d'acide sulfurique afin de subir une oxydation anodique dure (OAD) durant laquelle une couche superficielle du substrat 10 de la zone à traiter contre l'usure U, ayant été découverte lors de l'étape d'usinage, est oxydée pour former une couche d'alumine 30. Cette couche d'alumine 30 permet de renforcer localement la résistance de la pièce 1 contre l'usure dans la zone U.

La pièce ainsi obtenue peut enfin subir des étapes de finition, notamment des étapes de rinçage ou d'usinage pour aboutir à la pièce finale 1 représentée à la FIG 1E. Une telle pièce finale 1 peut ainsi comporter, dans la zone U de traitement anti-usure, une couche d'alumine dure 30 de 40 à 100 µm d'épaisseur et, hors de cette zone U, une couche de sol-gel solidifié 20' de 2 à 10µm d'épaisseur. Une telle couche sol-gel 20' offre une résistance au brouillard salin supérieure à 500h.

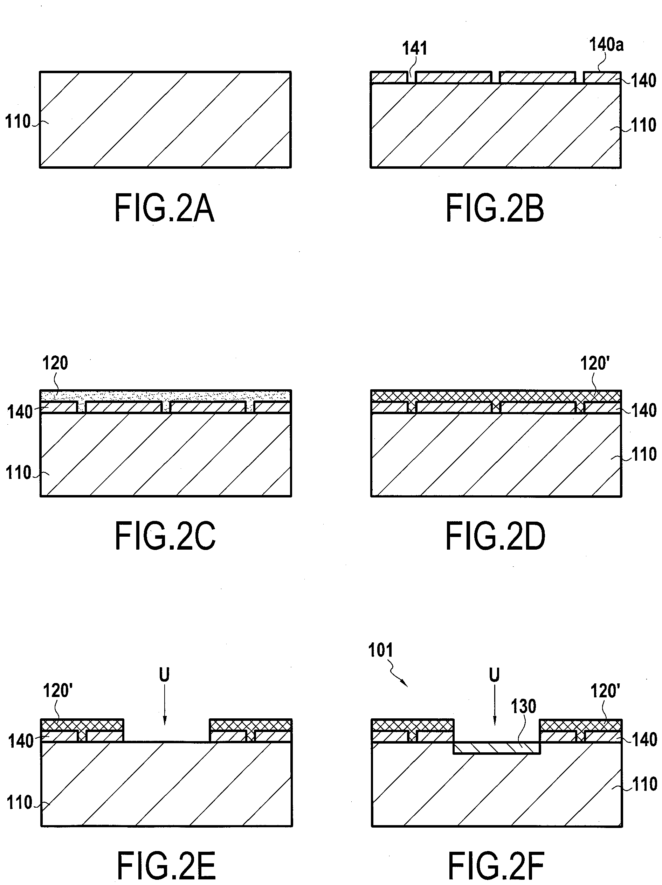

Les FIG 2A à 2F illustrent quant à elle un exemple de procédé selon l'invention visant à munir un substrat 110 en aluminium, ou en alliage d'aluminium, d'un revêtement de protection anti-usure et anti-corrosion. Il est rappelé que l'invention ne se limite pas à cet exemple.

Dans un premier temps, le substrat 110 peut subir des étapes de préparation telles que des étapes de dégraissage, de rinçage et/ou de décapage.

Une fois la surface 110a du substrat 110 ainsi apprêtée, on plonge la pièce dans un bain d'acide sulfurique afin de lui faire subir une oxydation anodique sulfurique (OAS) durant laquelle une couche superficielle du substrat 110 est oxydée pour former une couche d'alumine poreuse 140, aboutissant ainsi à la pièce de la FIG 2B. Dans d'autres exemples, le bain comprend plutôt de l'acide tartro-sulfurique ou encore de l'acide phosphorique pour réaliser une oxydation anodique tartro-sulfurique ou phosphorique, respectivement.

Les étapes suivantes de ce deuxième exemple de procédé sont sensiblement identiques à celles du premier exemple décrit ci-dessus. On applique ici une couche de sol-gel liquide 120 sur la surface 140a de la couche d'alumine poreuse 140 : le sol-gel liquide peut alors s'infiltrer dans les pores 141 de la couche d'alumine 140 et combler ces derniers. On obtient ainsi la pièce de la FIG 2C.

Une fois cette étape de dépôt du sol-gel terminée, la pièce subit une étape de cuisson analogue à celle du premier exemple aboutissant à la pièce de la FIG 2D dans laquelle une couche de sol-gel solidifié 120' recouvre et comble les pores de la couche d'alumine poreuse 140.

A l'issue de cette étape, la zone U de la pièce à traiter spécifiquement contre l'usure est usinée de manière à retirer localement la couche de sol-gel solidifié 120' ainsi que la couche d'alumine poreuse 140 afin de découvrir la partie du substrat 110 non oxydée. La pièce ainsi obtenue, représentée à la FIG 2E, peut ensuite subir des étapes de préparation telles que des étapes de dégraissage et/ou de rinçage.

La pièce ainsi apprêtée est ensuite plongée dans un bain d'acide sulfurique afin de subir une oxydation anodique dure (OAD) durant laquelle une couche superficielle du substrat 110 de la zone à traiter contre l'usure U, découverte lors de l'étape d'usinage, est oxydée pour former une couche d'alumine dure 130.

La pièce ainsi obtenue peut enfin subir des étapes de finition, notamment des étapes de rinçage ou d'usinage pour aboutir à la pièce finale 101 représentée à la FIG 2F. Une telle pièce finale 101 peut ainsi comporter, dans la zone U de traitement anti-usure, une couche d'alumine dure 130 de 40 à 100 µm d'épaisseur et, hors de cette zone U, une couche d'alumine 140 de 2 à 12 µm d'épaisseur surmontée d'une couche de sol-gel solidifié 120' de 1 à 10 µm d'épaisseur, les porosités de la couche d'alumine 140 étant en outre comblées par le sol-gel. Une telle couche d'alumine 140 associée à une couche sol-gel 120' offre une résistance au brouillard salin supérieure à 700h.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Procédé de traitement anti-corrosion et anti-usure d'un substrat en aluminium ou en alliage d'aluminium, le procédé comprenant, appliquées au substrat (110),
une première étape d'oxydation formant une couche d'oxyde poreuse (140),
une étape de traitement sol-gel, postérieure à la première étape d'oxydation, formant une couche sol-gel (120'), l'étape de traitement sol-gel ayant lieu sur la couche d'oxyde poreuse (140) sans étape préalable de colmatage de cette couche, le sol-gel (120) s'infiltrant dans les porosités (141) de la couche d'oxyde poreuse (140) lors de cette étape de traitement sol-gel;
une étape d'usinage, postérieure à l'étape de traitement sol-gel, au cours de laquelle au moins une zone à traiter (U) est usinée de manière à éliminer dans cette zone (U) la couche sol-gel (120) et la couche d'oxyde poreuse (140) ; et
une étape d'oxydation dure, postérieure à l'étape de traitement sol-gel et à l'étape d'usinage, formant une couche d'oxyde dure (130) dans la zone à traiter (U).

2. Procédé selon, dans lequel l'étape d'oxydation dure est une oxydation anodique dure (OAD).

3. Procédé selon la revendication 1 ou 2, dans lequel l'étape d'oxydation supplémentaire est une oxydation anodique sulfurique (OAS), tartro-sulfurique ou phosphorique.

4. Procédé selon l'une quelconque des revendications 1 à 3, dans lequel au moins une partie du sol-gel utilisé comprend du glycidoxypropyltrimethoxysilane.

5. Pièce mécanique comprenant
un substrat en aluminium ou en alliage d'aluminium (10), et
un revêtement anti-corrosion et anti-usure obtenu par un procédé selon l'une quelconque des revendications ci-dessus.

6. Turbomachine comprenant une pièce mécanique (1) selon la revendication 5.

7. Train d'atterrissage comprenant une pièce mécanique (1) selon la revendication 5.

## Patentansprüche

1. Verfahren zur Korrosions- und Verschleißschutzbehandlung eines Substrats aus Aluminium oder einer Aluminiumlegierung, wobei das Verfahren umfasst, an dem Substrat (110) auszuführen:
einen ersten Oxidationsschritt, der eine poröse Oxidschicht (140) bildet,
einen Sol-Gel-Behandlungsschritt, der nach dem ersten Oxidationsschritt eine Sol-Gel-Schicht (120') bildet, wobei der Sol-Gel-Behandlungsschritt auf der porösen Oxidschicht (140) ohne vorherigen Verdichtungsschritt dieser Schicht stattfindet, wobei das Sol-Gel (120) während dieses Sol-Gel-Behandlungsschritts in die Porositäten (141) der porösen Oxidschicht (140) eindringt,
einen Bearbeitungsschritt im Anschluss an den Sol-Gel-Behandlungsschritt, bei dem mindestens ein zu behandelnder Bereich (U) so bearbeitet wird, dass in diesem Bereich (U) die Sol-Gel-Schicht (120) und die poröse Oxidschicht (140) entfernt werden, und
einen Hartoxidationsschritt, der im Anschluss an den Sol-Gel-Behandlungsschritt und den Bearbeitungsschritt eine Hartoxidschicht (130) in dem zu behandelnden Bereich (U) bildet.

2. Verfahren nach Anspruch 1, wobei es sich bei dem Hartoxidationsschritt um eine harte anodische Oxidation (OAD) handelt.

3. Verfahren nach Anspruch 1 oder 2, wobei es sich bei dem zusätzlichen Oxidationsschritt um eine anodische Schwefel- (OAS), Weinstein-Schwefel- oder Phosphoroxidation handelt.

4. Verfahren nach einem der Ansprüche 1 bis 3, wobei zumindest ein Teil des verwendeten Sol-Gels Glycidoxypropyltrimethoxysilan umfasst.

5. Mechanisches Teil, umfassend
ein Substrat aus Aluminium oder einer Aluminiumlegierung (10) und
eine Korrosions- und Verschleißschutzbeschichtung, die durch ein Verfahren nach einem der vorstehenden Ansprüche erhalten wird.

6. Turbomaschine, umfassend ein mechanisches Teil (1) nach Anspruch 5.

7. Fahrwerk, umfassend ein mechanisches Teil (1) nach Anspruch 5.

## Claims

1. A method of subjecting an aluminum or aluminum alloy substrate to treatment against corrosion and against wear, the method comprising applying the following steps to the substrate (110):
A first oxidation step forming a porous oxide layer (140) ;
a sol-gel treatment step, posterior to the first oxidation step, forming a sol-gel layer (120'), the sol-gel treatment step taking place on the porous oxide layer (140) without a prior step of filling in this layer, the sol-gel (120) infiltrating into the pores (141) of the porous oxide layer (140) during the sol-gel treatment step;
a machining step, posterior to the sol-gel treatment step, during which at least one zone (U) for treatment is machined so as to eliminate the sol-gel layer (120) and the porous oxide layer (140) from this zone (U); and
a hard oxidation step, posterior to the sol-gel treatment step and the machining step, forming a hard oxide layer (130) in the zone (U) for treatment.

2. A method according to claim 1, wherein the hard oxidation step is hard anodic oxidation (HAO).

3. A method according to claim 1 or claim 2, wherein the additional oxidation step is sulfuric anodic oxidation (SAO), tartro-sulfuric anodic oxidation, or phosphoric anodic oxidation.

4. A method according to any one of claims 1 to 3, wherein at least a portion of the sol-gel used comprises glycidoxypropyltrimethoxysilane.

5. A mechanical part comprising:
an aluminum or aluminum alloy substrate (10); and
an anti-corrosion and anti-wear coating obtained by a method according to any preceding claim.

6. A turbine engine including a mechanical part (1) according to claim 5.

7. Landing gear including a mechanical part (1) according to claim 5.
